# EUROPÄISCHE PATENTSCHRIFT

(11) **EP 1 238 616 B1**
(45) Veröffentlichungstag und Bekanntmachung des Hinweises auf die Patenterteilung: **16.07.2003**
(21) Anmeldenummer: 02000623.5
(22) Anmeldetag: 11.01.2002
(51) Int. Cl.: A47J 31/057, A47J 31/44

(54) **Kaffeemaschine**
Coffee machine
Machine à café

(30) Priorität: 22.02.2001 DE 20103121 U
(43) Veröffentlichungstag der Anmeldung: 11.09.2002
(73) Patentinhaber: MELITTA HAUSHALTSPRODUKTE GmbH & Co. Kommanditgesellschaft, D-32427 Minden (DE)
(72) Erfinder: Sachtleben, Andreas, 32427 Minden (DE); Chan, Kwan Woon, Central Hongkong (HK)
(74) Vertreter: Loesenbeck, Karl-Otto, Dipl.-Ing.

(56) Entgegenhaltungen:
- DE-A- 3 919 958
- FR-A- 2 685 861

## Beschreibung

Die vorliegende Erfindung betrifft eine Kaffeemaschine mit einem Frischwasserbehälter, einem Durchlauferhitzer und einem im wesentlichen vertikal verlaufenden Steigrohr, durch welches erhitztes Wasser in einen in einem Deckel angeordneten, im wesentlichen horizontal verlaufenden Überlauf gefördert wird, wobei der Deckel oberhalb eines Filtergefäßes angeordnet ist, so daß vom Durchlauferhitzer auf Brühtemperatur erhitztes Wasser über das Steigrohr in den Überlauf gefördert und das Brühwasser aus dem Überlauf in das Filtergefäß einfließen kann, wobei der Deckel um eine horizontal verlaufende Schwenkachse aus seiner Gebrauchslage heraus in eine das Filtergefäß zugänglich machende Öffnungsstellung aufschwenkbar ist.

Kaffeemaschinen sind in verschiedensten Ausführungsformen bekannt.

Eine Kaffeemaschine nach dem Oberbegriff des unabhängigen Anspruchs 1 ist in FR-A-2 685 861 offenbart.

Unabhängig von der jeweiligen Ausführungsform weisen Kaffeemaschinen einen Frischwasserbehälter auf, in den eine bestimmte Menge an Frischwasser eingefüllt werden kann. Über einen Durchlauferhitzer wird das Frischwasser nach Einschalten der Kaffeemaschine erhitzt und über das Steigrohr und den Überlauf in das Filtergefäß gefördert. Im Filtergefäß befindliches Kaffeemehl wird vom Brühwasser durchlaufen und extrahiert das im Filtergefäß befindliche Kaffeemehl und der aufgebrühte Kaffee fließt dann in eine unterhalb des Filtergefäßes angeordnete Kanne.

Das Filtergefäß muß sowohl zum Einsetzen eines Filterpapiereinsatzes, in den das Kaffeemehl eingeführt wird, wie auch zum Entnehmen des Filterpapiereinsatzes nach einem Brühprozeß frei zugänglich gemacht werden.

Hier gibt es prinzipiell zwei verschiedene Konstruktionsarten.

Eine weit verbreitete Lösung sieht vor, daß der Filterpapiereinsatz um eine vertikale Achse schwenkbar am Gehäuse gelagert ist und seitlich aus dem Überdeckungsbereich eines den Überlauf in sich aufnehmenden, ansonsten fest mit dem Gehäuse verbundenen Deckels oder Daches herausschwenkbar ist.

Bei einer Kaffeemaschine gemäß dem Gattungsbegriff wird ein hiervon abweichendes Konstruktionsprinzip verwendet. Bei diesen Kaffeemaschinen ist der Filterpapiereinsatz selbst fest mit dem Gehäuse verbunden und der das Filtergehäuse abschließende Deckel kann um eine horizontal verlaufende Achse in eine Öffnungsstellung geschwenkt werden.

Bei einem derartigen Konstruktionsprinzip ist also eine Relativbewegung des Überlaufes zum Steigrohr erforderlich.

Bei bekannten Konstruktionen dieser Art liegt die Schwenkachse des Deckels unmittelbar im Übergangsbereich zwischen Steigrohr und Überlauf und der Überlauf ist mit einem koaxial zur Schwenkachse verlaufenden Stutzen versehen, der in eine Anschlußmuffe des Steigrohres hineinragt und gegenüber dieser Anschlußmuffe innerhalb der Schwenkachse verschwenkbar ist.

Der Überlauf und das Steigrohr sind also in ständigem, formschlüssigen Kontakt, der Stutzen des Überlaufes kann lediglich innerhalb der Muffe des Steigrohres gedreht werden.

Funktionell ist eine derartige Lösung durchaus akzeptabel, nachteilig ist lediglich, daß durch eine derartige Konstruktion die Gestaltungsmöglichkeiten bezüglich des Gehäuses der Kaffeemaschine stark eingeschränkt werden.

Der vorliegenden Erfindung liegt die Aufgabe zugrunde, eine Kaffeemaschine der gattungsgemäßen Art aufzuzeigen, deren Gestaltungsmöglichkeiten bezüglich Form und Design durch die Verwendung eines schwenkbaren Deckels zur Abdeckung des Filtergefäßes nicht beeinträchtigt werden.

Diese Aufgabe wird erfindungsgemäß dadurch gelöst, daß die Schwenkachse gegenüber dem Übergangsbereich von Steigrohr und Überlauf vorzugsweise um 90° versetzt angeordnet ist und daß das Steigrohr im Übergangsbereich zum Überlauf mit einem Kupplungsteil versehen ist, in welches ein Kupplungsstutzen des Überlaufrohres bei geschlossenem Deckel eingreift, wobei der Überlauf zumindest so weit verschwenkbar ist, daß der Kupplungsstutzen völlig außerhalb des Kupplungsteiles liegt.

Da bei einer derartigen Konstruktion die Schwenkachse des Deckels vom Kupplungsbereich zwischen Steigrohr und Überlauf völlig getrennt ist, hat der Konstrukteur und/oder der Designer einer derartigen Kaffeemaschine vielfältigere Möglichkeiten bei der Gestaltung des Gehäuses, bei der Anordnung des Frischwasserbehälters sowie beim Grundriß der gesamten Kaffeemaschine.

Weitere Merkmale der Erfindung sind Gegenstand von Unteransprüchen.

In den beigefügten Zeichnungen ist ein Ausführungsbeispiel der Erfindung dargestellt, welches im folgenden näher beschrieben wird.

Es zeigen:
- Figur 1: eine Vorderansicht einer erfindungsgemäßen Kaffeemaschine bei geschlossenem Deckel,
- Figur 2: eine Seitenansicht der Kaffeemaschine gemäß Figur 1 bei geöffnetem Deckel,
- Figur 3: eine schematisch dargestellte Draufsicht auf die Kaffeemaschine gemäß den Figuren 1 und 2, dargestellt ohne Aufnahmekanne zur Aufnahme von Filterkaffee,
- Fig. 4-6: Detaildarstellungen wesentlicher Einzelheiten der erfindungsgemäßen Kaffeemaschine vor dem Verschließen des Deckels,

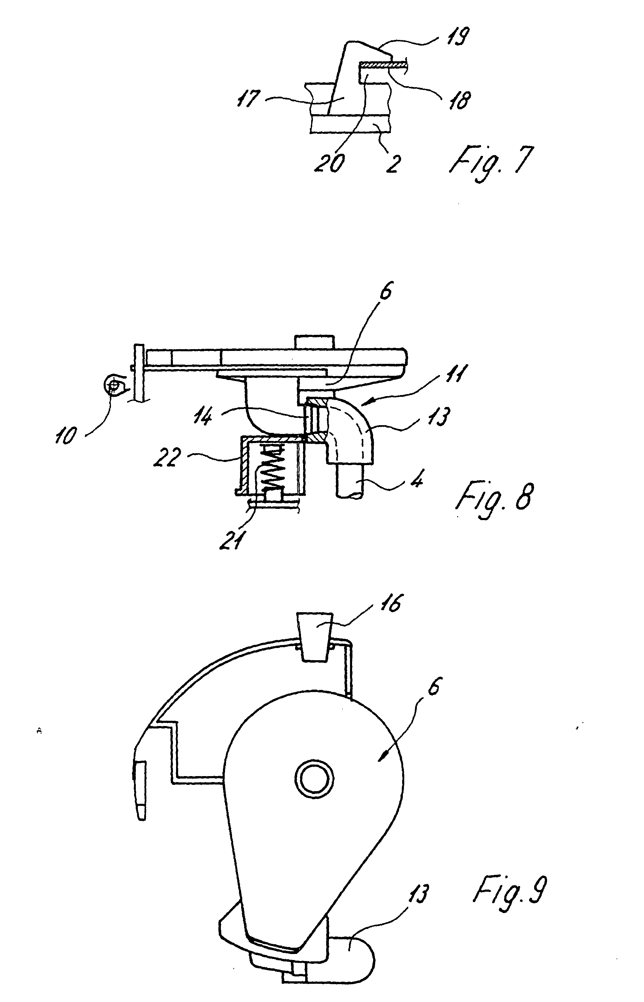

- Fig. 7-9: Detaildarstellungen wesentlicher Einzelheiten der erfindungsgemäßen Kaffeemaschine bei geschlossenem Deckel,
- Figur 10: eine Schnittdarstellung durch den Deckelbereich im geschlossenen Zustand.

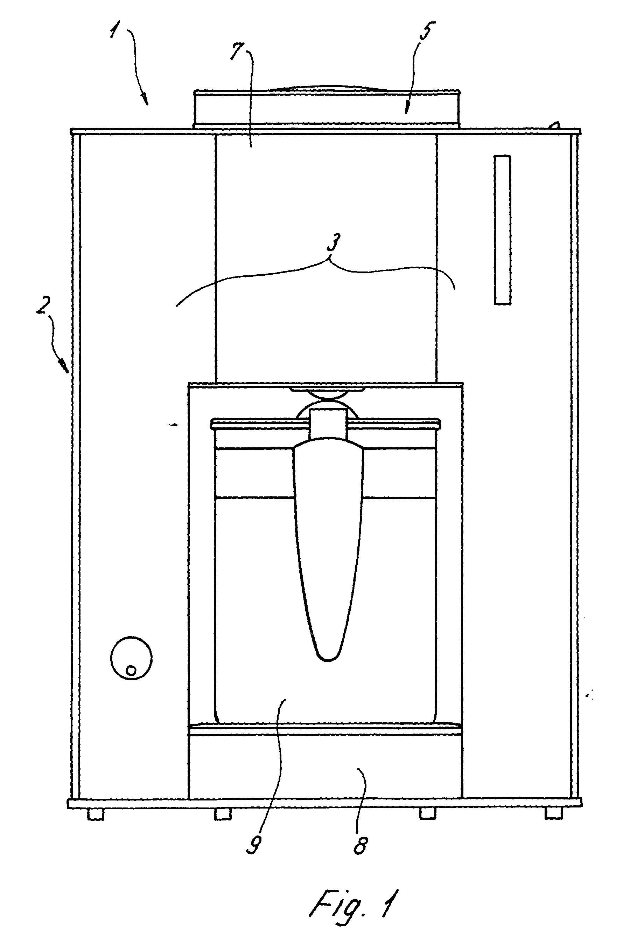

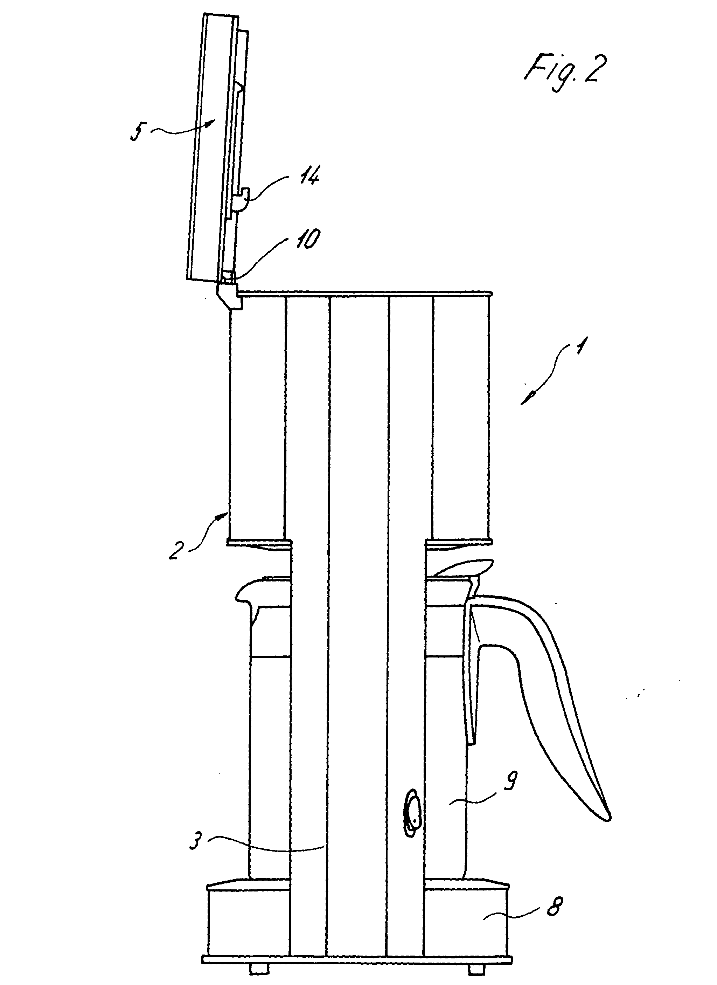

In den Figuren 1-3 ist mit dem Bezugszeichen 1 insgesamt eine Kaffeemaschine bezeichnet, deren Gehäuse 2 in bekannter Weise in einem Frischwasserbehälter 3, einem nicht weiter dargestellten Durchlauferhitzer und einem im wesentlichen vertikal verlaufenden Steigrohr 4 ausgestattet ist, über welches durch den Durchlauferhitzer erhitztes Wasser in einen in einem Deckel 5 der Kaffeemaschine 1 integrierten Überlauf 6 gefördert wird.

Unterhalb des Deckels 5 mit dem Überlauf 6 befindet sich ein Filtergefäß 7, welches im Detail nicht dargestellt ist, üblicherweise aber dazu bestimmt ist, einen Filterpapiereinsatz aufzunehmen, in den Kaffeemehl eingefüllt wird. Unterhalb des Filtergefäßes ist auf einer Warmhalteplatte 8 eine Kanne 9 oder ein beliebiger anderer Behälter angeordnet, der den im Filtergefäß 7 frisch gebrühten Filterkaffee aufnimmt.

Dieser grundsätzliche Aufbau der Kaffeemaschine 1 ist allgemein bekannt, weshalb noch einmal darauf hingewiesen werden darf, daß insoweit auf eine detailliertere Darstellung dieser grundsätzlichen Komponenten verzichtet wurde.

Im vorliegenden Falle ist der Deckel 5 am Gehäuse 2 der Kaffeemaschine 1 anscharniert und um eine Schwenkachse 10 schwenkbar.

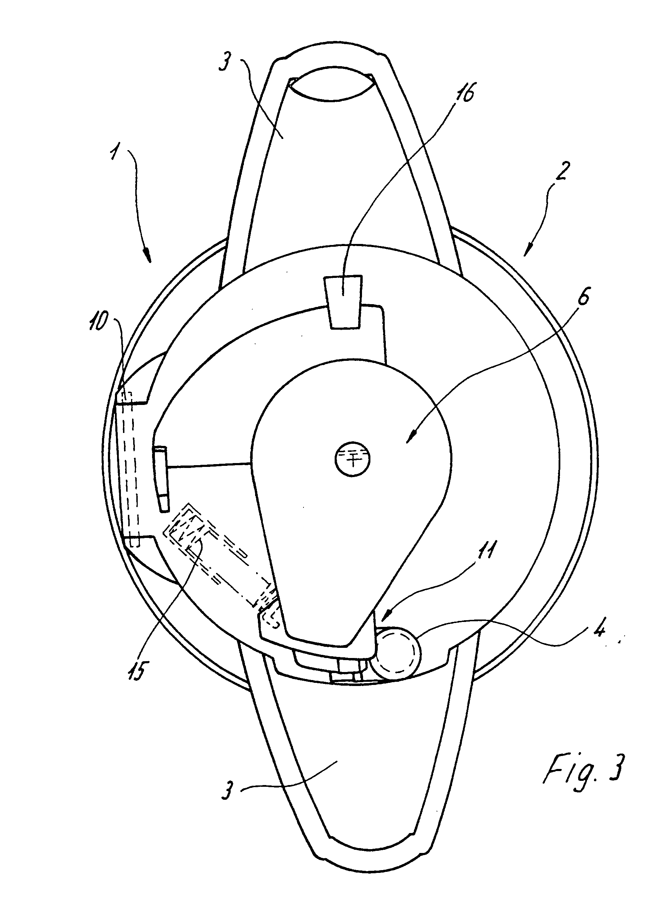

Diese Schwenkachse 10 ist gegenüber dem Übergangsbereich 11 vom Steigrohr 4 und Überlauf 6 um etwa 90° versetzt, was Figur 3 besonders anschaulich zeigt.

Der Überlauf 6 ist innerhalb des Deckels 5, der im wesentlichen aus einem Deckelunterteil 5a und einem Deckeloberteil 5b besteht, in gewissen Grenzen drehbar gelagert.

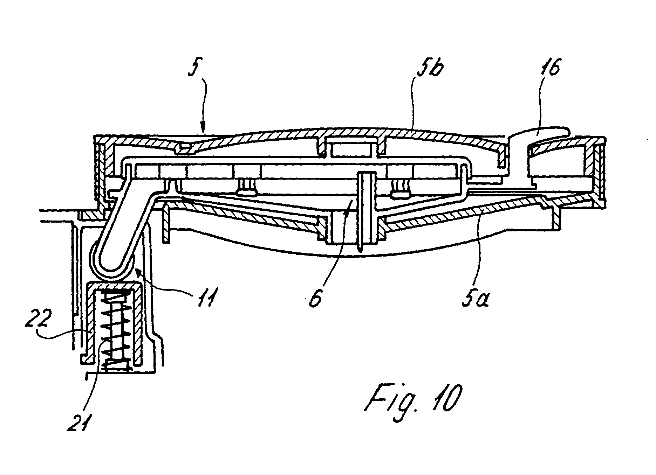

Im Übergangsbereich 11 vom Steigrohr 4 und Überlauf 6 ist das Steigrohr 4 mit einem Kupplungsteil 13 versehen, in welches ein Kupplungsstutzen 14 des Überlaufes 6 bei geschlossenem Deckel 5 eingreift, so wie dies aus Figur 8 besonders anschaulich hervorgeht.

Der im Deckel 5 in Grenzen drehbar gelagerte Überlauf 6 ist durch eine Feder 15 belastet, durch welche der Kupplungsstutzen 14 bei geschlossenem Deckel 5 in seiner Eingriffsstellung zum Kupplungsstück 13 des Steigrohres 4 gehalten wird.

Soll der Deckel 5 geöffnet werden, ist es zunächst erforderlich, den Kupplungsstutzen 14 außer Eingriff zum Kupplungsteil 13 zu bringen.

Dies kann durch Verschwenken des Überlaufes 6 entgegen der Wirkung der Feder 15 geschehen. Zu diesem Zweck ist am Überlauf 6 ein Betätigungsteil 16 vorgesehen, welches aus dem Oberteil 5b des Deckels 5 nach außen hervorragt und somit von einem Benutzer erfaßt und betätigt werden kann.

Durch dieses Betätigungsteil 16 kann der gesamte Überlauf 6 entgegen der Wirkung der Feder 15 verschwenkt oder gedreht werden, so daß der Kupplungsstutzen 14 außer Eingriff mit dem Kupplungsteil 13 des Steigrohres 4 gebracht werden kann. In dieser Position kann dann der Deckel 5 um die Schwenkachse 10 verschwenkt und geöffnet werden, so daß das Filtergefäß 7 von oben frei zugänglich ist.

Beim Schließen des Deckels 5 mit dem darin befindlichen Überlauf 6 genügt es, diesen Deckel 5 in seine Schließstellung zu drücken.

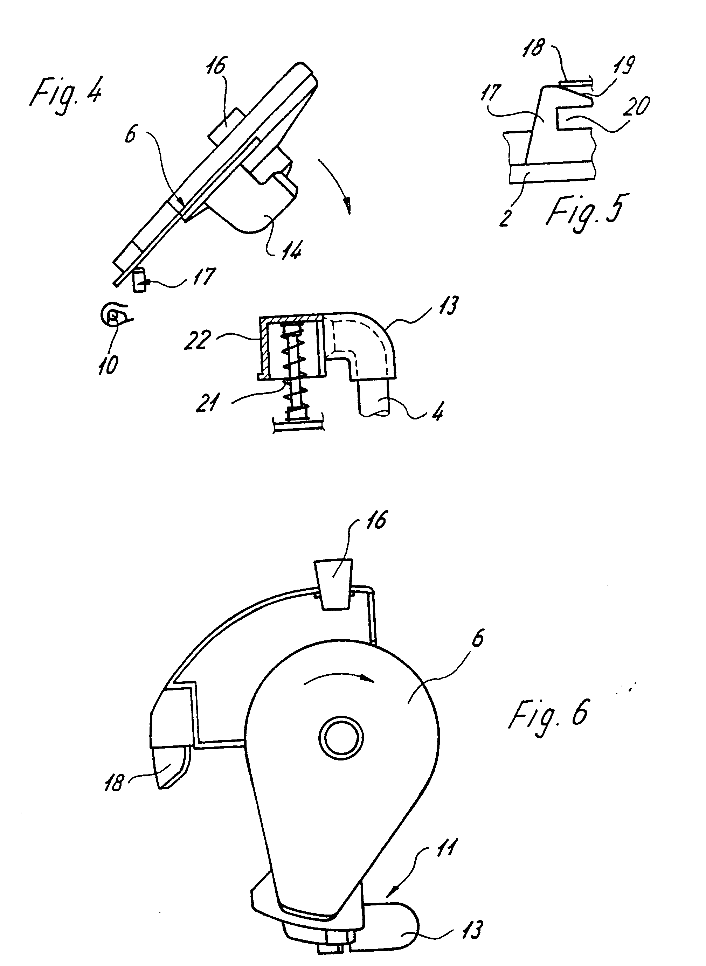

Wie aus den Figuren 4-6 deutlich hervorgeht, ist am Gehäuse 2 eine Rastnase 17 angeordnet, die beim Schließen des Deckels 5 von einer Rastklinke 18 des Überlaufes 6 überfahren wird. Wie insbesondere Figur 5 deutlich macht, ist die Rastnase 17 mit einer Einlaufschräge 19 ausgestattet, über welche die Rastklinke 18 beim Schließen des Deckels 5 hinweggleiten muß. Hierdurch erfolgt eine Verdrehung des innerhalb des Deckels 5 integrierten Überlaufes 6 entgegen der Wirkung der den Überlauf 6 belastenden Feder 15, so daß auch beim Schließen des Deckels 5 zunächst der Kupplungsstutzen 14 außerhalb des Kupplungsteiles 13 des Steigrohres 4 liegt. Sobald die Rastklinke 18 in die Rastausnehmung 20 der Rastnase 17 einrastet, wird der Überlauf 6 durch die Belastung der Feder 15 wieder in eine Position verschwenkt, in der der Kupplungsstutzen 14 sicher und abdichtend in das Kupplungsteil 13 des Steigrohres 4 eingreift.

Wie aus den Figuren 4 und 8 deutlich hervorgeht, ist unterhalb des Kupplungsstutzens 14 des Überlaufes 6 ein durch eine Feder 21 belastetes Schließteil 22 angeordnet, welches bei in das Kupplungsteil 13 eingreifendem Kupplungsstutzen 14 von diesem Kupplungsstutzen 14 entgegen der Wirkung der Feder 21 aus dem Kupplungsbereich 11 heraus bewegt ist. Diese Position zeigt Figur 8. Wird der Deckel 5 geöffnet und folglich der Kupplungsstutzen 14 des Überlaufes 6 vom Kupplungsteil 13 des Steigrohres 4 getrennt, bewegt die Feder 21 das Schließteil 22 dichtend vor die Anschlußöffnung des Kupplungsteiles 13, so daß weder heißes Wasser noch Wasserdampf nach außen austreten kann. Eventuell noch im Steigrohr 4 nach oben steigendes heißes Wasser oder nach oben steigender heißer Wasserdampf werden zurückgeführt in den Frischwasserbehälter 3.

Die erfindungsgemäße Kaffeemaschine 1 kann aufgrund der Trennung von Schwenkachse 10 des Deckels 5 und Kupplungsbereich 11 zwischen Steigrohr 4 und Überlauf 6 beliebig gestaltet sein.

Die Verbindung von Überlauf 6 und Steigrohr 4 wird beim Öffnen des Deckels 5 manuell getrennt und beim Schließen des Deckels 5, wie oben beschrieben, selbsttätig wieder hergestellt. Bei geöffnetem Deckel ist die Anschlußöffnung des Kupplungsteiles 13 des Steigrohres 4 nach außen durch das Schließteil 22 wirksam verschlossen, so daß auch beim Öffnen des Deckels 5 vor Beendigung des Brühvorganges keine Gefahr des unkontrollierten Auslaufens oder Austretens von heißem Wasser oder von heißem Wassserdampf gegeben ist.

Der Kupplungsstutzen 14 des Überlaufes 6 verläuft ― ebenso wie das gegenüber liegende Ende des Kupplungsteiles 13 des Steigrohres 4 ― bei geschlossenem Deckel 5 parallel zur Aufstandsebene der gesamten Kaffeemaschine 1, also in normaler Gebrauchslage horizontal, was Figur 8 anschaulich zeigt.

Hieraus ergibt sich, daß der Kupplungsstutzen bei geöffnetem, also nach oben geschwenkten Deckel 5 mit seinem offenen Ende nach oben verläuft, so daß im Überlauf 6 befindliches Kondenswasser auf keinen Fall aus dem Kupplungsstutzen 14 austreten kann. Das Kondenswasser kann somit bei geöffnetem Deckel weder auf die Kaffeemaschine selbst noch auf den Umgebungsbereich der Standfläche der Kaffeemaschine 1 tropfen kann.

## Patentansprüche

1. Kaffeemaschine mit einem Frischwasserbehälter (3), mit einem Durchlauferhitzer und einem im wesentlichen vertikal verlaufenden Steigrohr (4), durch welches erhitztes Wasser in einen in einem Deckel (5) angeordneten, im wesentlichen horizontal verlaufenden Überlauf (6) gefördert wird, wobei der Deckel (5) oberhalb eines Filtergefäßes (7) angeordnet ist, so daß vom Durchlauferhitzer auf Brühtemperatur erhitztes Wasser über das Steigrohr (4) in den Überlauf (6) gefördert und das Brühwasser aus dem Überlauf (6) in das Filtergefäß (7) einfließen kann, wobei der Deckel (5) um eine horizontal verlaufende Schwenkachse (10) aus seiner Gebrauchslage heraus in eine das Filtergefäß (7) zugänglich machende Öffnungsstellung aufschwenkbar ist, **dadurch gekennzeichnet, daß** die Schwenkachse (10) gegenüber dem Übergangsbereich (11) vom Steigrohr (4) und Überlauf (6) vorzugsweise um 90° versetzt angeordnet ist und daß das Steigrohr (4) im Übergangsbereich (11) zum Überlauf (6) mit einem Kupplungsteil (13) versehen ist, in welches ein Kupplungsstutzen (14) des Überlaufes (6) bei geschlossenem Deckel (5) eingreift, wobei der Überlauf (6) zumindest so weit verschwenkbar ist, daß der Kupplungsstutzen (14) völlig außerhalb des Kupplungsteiles (13) liegt.

2. Kaffeemaschine nach Anspruch 1, **dadurch gekennzeichnet, daß** der Überlauf (6) durch eine Feder (15) derart beaufschlagt ist, daß der Kupplungsstutzen (14) in Richtung des Kupplungsteiles (13) belastet ist.

3. Kaffeemaschine nach Anspruch 1 oder 2, **dadurch gekennzeichnet, daß** unterhalb des Kupplungsstutzens (14) ein federbelastetes Schließteil (22) angeordnet ist, welches bei in das Kupplungsteil (13) eingreifendem Kupplungsstutzen (14) von diesem entgegen der Wirkung der Feder (21) aus dem Kupplungsbereich heraus bewegt ist und bei vom Kupplungsteil (13) getrenntem Kupplungsstutzen (14) dichtend vor die Anschlußöffnung des Kupplungsteiles (13) verschoben ist.

4. Kaffeemaschine nach einem der vorhergehenden Ansprüche, **dadurch gekennzeichnet, daß** der Überlauf (6) mit dem Deckel (5) eine Baueinheit bildet und mit einer Rastnase (18) versehen ist, die bei geschlossenem Deckel in eine im Gehäuse (2) der Kaffeemaschine (1) vorgesehene Rastausnehmung (20) einer Rastklinke (17) eingreift.

5. Kaffeemaschine nach Anspruch 4, **dadurch gekennzeichnet, daß** die Rastklinke (17) eine mit der Rastnase (18) des Überlaufes (6) zusammenwirkende Einlaufschräge (19) aufweist, durch welche der Überlauf (6) entgegen der Wirkung der ihn belastenden Feder (15) zumindest so weit verschwenkbar ist, daß der Kupplungsstutzen (14) vor Erreichen der endgültigen Schließstellung des Dekkels (5) behinderungsfrei vor das Kupplungsteil (13) bewegbar ist.

6. Kaffeemaschine nach einem oder mehreren der vorhergehenden Ansprüche, **dadurch gekennzeichnet, daß** am Überlauf (6) ein aus dem Deckel (5) herausragendes Betätigungsteil angeordnet ist, mittels dessen der Überlauf (6) manuell entgegen der Wirkung der ihn belastenden Feder (15) verschwenkbar ist.

7. Kaffeemaschine nach einem oder mehreren der vorhergehenden Ansprüche, **dadurch gekennzeichnet, daß** der Überlauf (6) innerhalb des im wesentlichen aus einem Deckelunterteil (5a) und einem Deckeloberteil (5b) gebildeten Dekkels (5) schwenkbar gelagert ist.

8. Kaffeemaschine nach einem oder mehreren der vorhergehenden Ansprüche, **dadurch gekennzeichnet, daß** der Kupplungsstutzen 14 und der den Kupplungsstutzen 14 aufnehmende Bereich des Kupplungsteiles 13 bei geschlossenem Deckel 5 parallel zur Aufstandsebene der Kaffeemaschine 1 verlaufen.

## Claims

1. Coffee machine with a clean-water tank (3), with a flow heater and an essentially vertically running tube (4), through which heated water is delivered into an essentially horizontally running overflow (6) arranged in a lid (5), the lid (5) being arranged above a filter vessel (7), with the result that water heated to brewing temperature by the flow heater is delivered into the overflow (6) via the vertical tube (4) and the brewing water can flow into the filter vessel (7) from the overflow (6), it being possible for the lid (5) to be pivoted, about a horizontally running pivot axis (10), out of its use position into an open position, in which the filter vessel (7) is rendered accessible, **characterized in that** the pivot axis (10) is offset preferably through 90° in relation to the transition region (11) from the vertical tube (4) and overflow (6), and **in that** the vertical tube (4), in the transition region (11) to the overflow (6), is provided with a coupling part (13) in which a coupling connector (14) of the overflow (6) engages when the lid (5) is closed, it being possible for the overflow (6) to be pivoted at least to the extent where the entire coupling connector (14) is located outside the coupling part (13).

2. Coffee machine according to Claim 1, **characterized in that** the overflow (6) is subjected to the action of a spring (15) such that the coupling connector (14) is loaded in the direction of the coupling part (13).

3. Coffee machine according to Claim 1 or 2, **characterized in that** arranged beneath the coupling connector (14) is a spring-loaded closing part (22) which, with the coupling connector (14) engaging in the coupling part (13), is moved out of the coupling region, counter to the action of the spring (21), and, with the coupling connector (14) separated from the coupling part (13), is displaced with sealing action in front of the connection opening of the coupling part (13).

4. Coffee machine according to one of the preceding claims, **characterized in that** the overflow (6) forms a structural unit with the lid (5) and is provided with a latching nose (18) which, with the lid closed, engages in a latching recess (20) of a catch (17), said recess being provided in the housing (2) of the coffee machine (1).

5. Coffee machine according to Claim 4, **characterized in that** the catch (17) has a run-in slope (19) which interacts with the latching nose (18) of the overflow (6) and by means of which the overflow (6) can be pivoted, counter to the action of the spring (15) subjecting it to loading, at least to the extent where the coupling connector (14) can be moved without obstruction in front of the coupling part (13) prior to the definitive closed position of the lid (5) being reached.

6. Coffee machine according to one or more of the preceding claims, **characterized in that** arranged on the overflow (6) is an actuating part which projects out of the lid (5) and by means of which the overflow (6) can be pivoted manually counter to the action of the spring (15) subjecting it to loading.

7. Coffee machine according to one or more of the preceding claims, **characterized in that** the overflow (6) is mounted in a pivotable manner within the lid (5), which is essentially formed from a bottom lid part (5a) and a top lid part (5b).

8. Coffee machine according to one or more of the preceding claims, **characterized in that**, with the lid (5) closed, the coupling connector (14) and that region of the coupling part (13) which accommodates the coupling connector (14) run parallel to the standing plane of the coffee machine (1).

## Revendications

1. Machine à café avec un réservoir d'eau fraîche (3), avec un réchauffeur à passage et avec un tube de montée (4) s'étendant sensiblement verticalement, à travers lequel de l'eau chauffée est envoyée dans un trop-plein (6) placé dans un couvercle (5) et s'étendant sensiblement horizontalement, le couvercle (5) étant placé au-dessus d'un récipient à filtre (7), de sorte que l'eau chauffée à la température d'infusion par le réchauffeurs à passage est envoyée dans le trop-plein (6) à travers le tube de montée (4) et l'eau d'infusion peut s'écouler du trop-plein (6) dans le récipient à filtre (7), le couvercle pouvant pivoter, autour d'un axe de pivotement (10) d'extension horizontale, de sa position d'utilisation à sa position ouverte rendant accessible le récipient à filtre (7), **caractérisée en ce que** l'axe de pivotement (10) est de préférence décalé de 90° par rapport à la zone de transition (11) entre le tube de montée (4) et le trop-plein (6) et **en ce que** le tube de montée (4) est muni, dans la zone de transition (11) avec le trop-plein (6), d'une partie d'accouplement (13) dans laquelle s'engage un manchon d'accouplement (14) du trop-plein (6) quand le couvercle (5) est fermé, le trop-plein (6) pouvant pivoter au moins jusqu'à ce que l'embout d'accouplement (14) se trouve complètement à l'extérieur de la partie d'accouplement (13).

2. Machine à café selon la revendication 1, **caractérisée en ce que** le trop-plein (6) est chargé par un ressort (15) de telle manière que l'embout d'accouplement (14) soit chargé en direction de la partie d'accouplement (13).

3. Machine à café selon la revendication 1 ou 2, **caractérisée en ce qu'**au-dessous du manchon d'accouplement (14) se trouve une partie de fermeture (22) montée sur ressort qui, quand le manchon d'accouplement (14) est en prise dans la partie d'accouplement (13), est sortie de la zone d'accouplement par celui-ci contre l'effet du ressort (21) et qui, quand le manchon d'accouplement (14) est séparé de la partie d'accouplement (13), est poussée hermétiquement devant l'ouverture de raccordement de la partie d'accouplement (13).

4. Machine à café selon l'une des revendications précédentes, **caractérisée en ce que** le trop-plein (6) forme une unité avec le couvercle (5) et est muni d'un nez d'encliquetage (18) qui, quand le couvercle est fermé, s'engage dans un évidement d'encliquetage (20) d'un cliquet (17) prévu dans le boîtier (2) de la machine à café (1).

5. Machine à café selon la revendication 4, **caractérisée en ce que** le cliquet (17) présente un biseau d'entrée (19) coopérant avec le nez d'encliquetage (18) du trop-plein (6), par lequel le trop-plein (6) peut être pivoté contre l'effet du ressort (15) qui le charge au moins jusqu'à ce que le manchon d'accouplement (14) puisse être déplacé sans gène devant la partie d'accouplement (13) avant d'atteindre la position de fermeture définitive du couvercle (5).

6. Machine à café selon une ou plusieurs des revendications précédentes, **caractérisée en ce que** sur le trop-plein (6) est placé une partie de manoeuvre sortant du couvercle (5), au moyen de laquelle le trop-plein (6) peut être pivoté manuellement contre l'effet du ressort (15) qui le charge.

7. Machine à café selon une ou plusieurs des revendications précédentes, **caractérisés en ce que** le trop-plein (6) est monté pivotant à l'intérieur du couvercle (5) formé pour l'essentiel d'une partie inférieure de couvercle (5a) et d'une partie supérieure de couvercle (5b).

8. Machine à café selon une ou plusieurs des revendications précédentes, **caractérisée en ce que** le manchon d'accouplement (14) et la zone de la partie d'accouplement (13) recevant le manchon d'accouplement (14) s'étendent parallèlement au plan d'installation de la machine à café 1 quand le couvercle 5 est fermé.
